# EUROPÄISCHE PATENTSCHRIFT

(11) **EP 3 934 830 B1**
(45) Veröffentlichungstag und Bekanntmachung des Hinweises auf die Patenterteilung: **02.08.2023**
(21) Anmeldenummer: 20730415.5
(22) Anmeldetag: 03.06.2020
(51) Int. Cl.: B22F 3/105, C22C 1/04, B33Y 70/00, B33Y 10/00, B22F 1/052, B22F 1/18, C04B 35/622, C04B 35/628, B22F 10/20, B22F 1/16

(54) **PULVER ZUM LASERSINTERN UND VERWENDUNG**
POWDER FOR LASER SINTERING, AND USE
POUDRE POUR LE FRITTAGE LASER ET UTILISATION

(30) Priorität: 19.06.2019 DE 102019116665
(43) Veröffentlichungstag der Anmeldung: 12.01.2022
(73) Patentinhaber: Infinite Flex GmbH, 61440 Oberursel (DE); Infinite Flex (Taicang) Co. Ltd., Taicang Jiangsu 215400 (CN)
(72) Erfinder: MA, Kangkai, 61381 Friedrichsdorf (DE); HIRTH, Ulrich Andreas, 95445 Bayreuth (DE)
(74) Vertreter: Kohlmann, Kai
(86) Internationale Anmeldenummer: PCT/EP2020/065268
(87) Internationale Veröffentlichungsnummer: WO 2020/254108

(56) Entgegenhaltungen:
- EP-A1- 3 260 223
- EP-A1- 3 409 349
- WO-A1-2018/199110
- WO-A2-01/56736
- CN-A- 109 746 435
- US-A1- 2009 044 906
- US-A1- 2015 004 042
- US-A1- 2017 225 228
- US-A1- 2018 051 376
- TOLOCHKO N ET AL: "Selective laser sintering of single- and two-component metal powders", RAPID PROTOTYPING JOURNAL, MCB UNIVERSITY PRESS, BRADFORD, GB, Bd. 9, Nr. 2, 1. Januar 2003 (2003-01-01), Seiten 68-78, XP002678977, ISSN: 1355-2546, DOI: 10.1108/13552540310467077

## Beschreibung

Die Erfindung betrifft ein oberflächenmodifiziertes Pulver zum Lasersintern nach dem Oberbegriff des Anspruchs 1.

Lasersintern im Pulverbett bezeichnet einen Prozess, bei dem das Pulver, beispielweise aus Metall oder Kunststoff, gesintert oder vollständig und ohne Verwendung von Bindern aufgeschmolzen wird und nach der Erstarrung der Schmelze ein homogener Werkstoff hoher Dichte entsteht. Beim Lasersintern im Pulverbett wird die Energie, die von einem Laser zugeführt wird, von dem Pulver absorbiert und führt zu einem lokal begrenzten Sintern von Partikeln unter Verkleinerung der Gesamtoberfläche oder zum Aufschmelzen.

Das selektive Lasersintern (SLS) ist ein additives Fertigungsverfahren, um räumliche Strukturen, wie beispielweise ein Bauteil, durch Lasersintern mit einem Laser aus einem Pulver herzustellen. Die geometrischen Daten des herzustellenden Bauteils müssen als Schichtdaten vorliegen. Das Pulver, beispielsweise ein Metall- oder Keramikpulver wird auf eine Bauplattform vollflächig in einer Schichtdicke von 1 bis 200 µm aufgebracht. Die Schichten werden nach den Schichtdaten computergesteuert entsprechend der Schichtkontur des Bauteils in das Pulverbett gesintert. Die Bauplattform wird vor jedem Schritt geringfügig abgesenkt, um anschließend die nächste Schicht aufzuziehen. Durch die schichtweise Herstellung des Bauteils lassen sich auch hinterschnittene Konturen erzeugen. Ein großer Vorteil beim SLS ist, dass Stützstrukturen nicht erforderlich sind.

Das Bauteil wird während seiner Herstellung von dem umgebenden Pulver gestützt. Am Ende des Herstellungsprozesses kann das verbleibende Pulver abgeklopft werden.

Für das Lasersintern kommen insbesondere Faserlaser oder Nd:YAG-Laser zum Einsatz, die Laserstrahlung im nahen Infrarotbereich von 780 nm - 3000 nm erzeugen. Die beim Lasersintern verwendeten Pulver weisen abhängig von der Materialzusammensetzung einen unterschiedlichen Absorptionsgrad für die Laserstrahlung mit definierter Wellenlänge auf. Von dem Absorptionsgrad, auch als spektraler Absorptionskoeffizient bezeichnet, hängt ab, welcher Bruchteil der auftreffenden Laserstrahlung von dem Pulver absorbiert wird.

Pulver mit einem geringen Absorptionsgrad bei einer üblichen Laserwellenlänge im nahen Infrarotbereich verursachen Probleme beim Lasersintern. Das Absorptionsverhalten von Kupfer beträgt bei einer üblichen Laserwellenlänge von beispielsweise 1064 nm weniger als 5 %. Aufgrund des geringen Absorptionsgrades kann Kupferpulver nicht mit gängigen Lasern bei der üblichen Laserwellenlänge gesintert werden. Durch das Reflektionsverhalten des Kupferpulvers bei dieser Laserwellenlänge wird die Strahlungsenergie vorwiegend in die Auflagefläche des Pulvers eingekoppelt und kann zu einer thermischen Überlastung oder sogar Zerstörung der Auflagefläche führen.

Die EP 3 409 349 A1 offenbart ein oberflächenmodifiziertes Pulver zum Lasersintern umfassend übereinstimmende Partikel mit einem Partikelkern und an der Oberfläche jedes Partikelkerns angebundene Laserabsorber, wobei die Laserabsorber gegenüber dem Partikelkern einen höheren Absorptionsgrad für eine Laserstrahlung aufweisen. Der Partikelkern besteht aus reinem Kupfer, einer Kupferlegierung, Aluminium oder einer Aluminiumlegierung und ist von einer äußeren Schicht bedeckt, wobei die äußere Schicht aus metallischen Nanopartikeln oder Kohlenstoffnanoröhren besteht. Die Strukturierung der äußeren Schicht ermöglicht es, die Absorption zu erhöhen, indem ein Relief auf der Oberfläche des Partikels erzeugt wird. Zum Beispiel kann es eine Schicht mit Unebenheiten und Vertiefungen, Filamenten, Löchern usw. sein. Die Strukturierung kann entsprechend der Wellenlänge des Lasers gewählt werden, um die optische Absorption zu maximieren.

Die US 2018/0051376 A1 offenbart ein oberflächenmodifiziertes Pulver zum Lasersintern im Pulverbett. Ein Opfermaterial an der Oberfläche der Partikelkerne weist ein Reflexionsvermögen auf, das niedriger als das Reflexionsvermögen der Partikelkerne ist. Das Material der Partikelkerne kann ein metallisches Material sein und Aluminium, Titan, Kupfer oder eine Legierung davon umfassen. Das Opfermaterial kann sich verflüchtigen und verdampfen, wenn Energie auf das Pulver auftrifft, die ausreicht, um die Partikelkerne zu sintern. Die Energie kann unter Verwendung einer Energiequelle, wie z.B. eines Lasers, zugeführt werden. Das Opfermaterial kann z.B. ein kohlenstoffhaltiges Material, ein Oxid und /oder ein Nitrid sein. Das Beschichten der Partikeloberfläche erfolgt beispielsweise mit Hilfe von Wirbelschichtreaktoren, mit Atomschichtabscheidungstechniken, chemischen Gasphasenabscheidungstechniken, Pyrolyse nach Fest-Flüssig-Mischen und elektrolosen Plattierungstechniken.

Die WO 2018/199110 A1 offenbart oberflächenbeschichtete Partikel auf Kupferbasis, die bei einer additiven Fertigung mittels Lasern verwendet werden. Die Oberflächenbeschichtung ist eine Metalloxidschicht.

Ausgehend von diesem Stand der Technik liegt der Erfindung die Aufgabe zugrunde, ein Pulver zum Lasersintern vorzuschlagen, das eine verbesserte Einkopplung der Strahlungsenergie des Lasers im Wellenlängenbereich des nahen Infrarots erlaubt, insbesondere soll ein Pulver vorgeschlagen werden, welches das Lasersintern bei einem für das Lasersintern grundsätzlich nicht geeigneten Pulver ermöglicht, wobei die Laserabsorber, d.h. die die Laserstrahlung absorbierenden Moleküle, an die Oberfläche jedes Partikelkerns mit lediglich geringer Veränderung des Partikelkerns und der Laserabsorber angebunden werden.

Außerdem soll ein Verfahren zur Herstellung von Schichten und räumlichen Strukturen vorgeschlagen werden.

Die Lösung beruht auf dem Gedanken, ein oberflächenmodifiziertes Pulver aus reinem Kupfer mit verbesserten Absorptionseigenschaften im Bereich der Wellenlänge einer Laserstrahlung im nahen Infrarotbereich, insbesondere von 1064 nm, für das Lasersintern bereitzustellen.

Im Einzelnen wird die Aufgabe durch ein oberflächenmodifiziertes Pulver zum Lasersintern mit den Merkmalen des Anspruchs 1 gelöst.

Um das Lasersintern bei einem für das Lasersintern grundsätzlich nicht geeigneten Pulver aus reinem Kupfer zu ermöglichen, muss der Unterschied zwischen dem Absorptionsgrad der Laserabsorber und dem Absorptionsgrad des Partikelkerns deutlich größer als bei einem für das Lasersintern grundsätzlich geeigneten Pulver sein. Bei einer typischen Wellenlänge eines Faserlasers von 1064 nm beträgt der Absorptionsgrad von reinem Kupfer etwa 5 %. Um einen Partikelkern aus reinem Kupfer sintern zu können, beträgt der Absorptionsgrad der angebundenen Absorber mindestens 20 %, vorzugsweise jedoch 30 %.

Von Metallhydroxiden, wie beispielsweise Dikupferhydroxidphosphat ist bekannt, dass sie im üblichen Wellenlängenbereich der zum Lasersintern verwendeten Laser, d.h. im Bereich des nahen Infrarots, ein ausgezeichnetes Absorptionsvermögen besitzen. Bei Bestrahlung der Materialien mit Laserstrahlung im nahen Infrarotbereich erhitzen sich diese Metallhydroxide sehr stark und können teilweise Temperaturen von deutlich über 1000°C entwickeln. Die Laserabsorber bestehen daher aus Metallhydroxiden. Für das Pulver aus reinem Kupfer, das im Lasersinterprozess eingesetzt wird, lässt sich die unter der Laserstrahlung im nahen Infrarotbereich starke Erwärmung dieser gut strahlungsabsorbierenden Metallhydroxide zum Sintern der Metall-Partikelkerne verwenden.

Die Laserabsorber, d.h. die die Laserstrahlung absorbierenden Moleküle, sind durch Adsorption an die Oberfläche jedes Partikelkerns angebunden. Die Anbindung erfolgt im Wege der Physisorption, die eine Form der Adsorption ist, bei der die Moleküle durch Van-der-Waals-Kräfte an die Oberfläche jedes Partikelkerns gebunden werden. Die bei Physisorption wirkenden elektrostatischen Kräfte sind zwar schwächer als die elektrostatischen Kräfte bei einer chemischen Anbindung, reichen jedoch aus, um die Moleküle hinreichend stabil an der Oberfläche des Partikelkerns für den Sinterprozess zu stabilisieren. Ein Vorteil der Anbindung durch Physisorption bzw. Van-der-Waals-Kräfte besteht in der geringen Veränderung des Partikelkerns und der Laserabsorber.

Das oberflächenmodifizierte Pulver zum Lasersintern weist Partikel mit einem Partikelkern und an der Oberfläche jedes Partikelkerns angebundene Laserabsorber auf, wobei die Laserabsorber die Oberfläche jedes Partikelkerns zu mindestens 25%, vorzugsweise zu mindestens 30 % belegen. Die Partikel des Pulvers bestehen sämtlich aus reinem Kupfer.

Hinsichtlich der Größe und Form können die Partikel des Pulvers jedoch variieren. Vorzugsweise weisen die Partikel eine Partikelgröße mit einem Äquivalentdurchmesser D50 im Bereich von 10-100 um auf.

Die absorbierte Laserstrahlung wird in den Laserabsorbern effektiv in Wärme umgewandelt. Aufgrund der Anbindung der Laserabsorber an die Oberfläche wird die Wärme im Wege der Wärmeleitung auf den Partikelkern übertragen. Der für die Wärmeleitung erforderliche Temperaturunterschied zwischen Partikelkern und Laserabsorbern beruht auf der geringeren Erwärmung des Partikelkerns gegenüber den Laserabsorbern aufgrund des niedrigeren Absorptionsgrades des Partikelkerns für die Laserstrahlung.

Das Absorptionsverhalten der Materialien für den Partikelkern und die Laserabsorber wird vorzugsweise für eine Laserstrahlung mit einer Wellenlänge im nahen Infrarotbereich, insbesondere mit 1064 nm bestimmt. Der nahe Infrarotbereich erstreckt sich von 780 nm bis 3 um und umfasst die typischen Wellenlängen der Laserstrahlung, die von Festkörperlasern für das Lasersintern emittiert werden. Ein Nd:YAG-Festkörperlaser emittiert beispielsweise Laserstrahlung mit einer Wellenlänge von 1064 nm.

Sofern die Partikel mit weiteren Materialien, beispielsweise zur Verbesserung des Pulverfließverhaltens teilweise belegt werden sollen, ist bei der Herstellung darauf zu achten, dass zunächst die laserabsorbierenden Moleküle unmittelbar am metallischen Partikelkern angebunden werden, bevor weitere Materialien aufgebracht werden.

Sehr feine Metallpulver zeichnen sich häufig durch ein schlechtes Pulverfließverhalten aus, was das Einbringen des Pulvers in das Pulverbett zum Lasersintern beeinträchtigen kann. Um das Pulverfließverhalten günstig zu beeinflussen und zugleich ein effektives Lasersintern zu ermöglichen, weist die Partikelgröße einen Äquivalentdurchmesser D 50 im Bereich von 10-100 um auf.

Das erfindungsgemäße oberflächenmodifizierte Pulver ist insbesondere für die Verwendung zum Lasersintern in einem Pulverbett des oberflächenmodifizierten Pulvers geeignet, beispielsweise um eine Beschichtung auf einem Substrat herzustellen. Weil die Partikelkerne des Pulvers aus reinem Kupfer bestehen, lassen sich im Wege des Lasersinterns Leiterbahnstrukturen und/oder Kontaktbereiche auf Oberflächen herstellen, die sich durch eine hohe Leitfähigkeit auszeichnen.

Im Wege des selektiven Lasersinterns lassen sich jedoch nicht nur Beschichtungen, sondern auch räumliche Strukturen aus dem erfindungsgemäßen Pulver herstellen. Insbesondere kann mit dem Pulver das selektive Lasersintern nunmehr auch für reines Kupfer eingesetzt werden, das aufgrund seines geringen Absorptionsgrad für die Laserstrahlung im nahen Infrarotbereich der üblicherweise verwendeten Festkörperlaser bisher nicht in Betracht kamen, wie beispielsweise reines Kupfer.

Das erfindungsgemäße oberflächenmodifizierte Pulver lässt sich vorteilhaft auch beim Laserauftragsschweißen mit Pulver verwenden.

Laserauftragschweißen ist ein Verfahren bei dem auf ein Werkstück ein Oberflächenauftrag mittels Aufschmelzen und gleichzeitigem Aufbringen eines Materials, insbesondere auch in Pulverform, erfolgt. Beim Laserauftragschweißen dient als Wärmequelle ein Laser hoher Leistung, vornehmlich ein Diodenlaser oder ein Faserlaser. Das Verfahren kann sowohl zur Erzeugung von Schichten als auch von freigeformtem 2,5D-Strukturen verwendet werden. Beim Laserauftragschweißen mit Pulver erhitzt der Laser das Werkstück und schmilzt es lokal auf. Gleichzeitig wird ein inertes Gas gemischt mit dem Pulver zugeführt. Die Versorgung des Wirkbereichs mit dem Pulver-/Gasgemisch erfolgt über Koaxialdüsen. An der erhitzten Stelle schmilzt das Pulver auf und verbindet sich mit dem Werkstück. Durch Verwenden des oberflächenmodifizierten Pulvers lassen sich im Wege des Laserauftragsschweißens nun auch Pulver aus reinem Kupfer verarbeiten, die andernfalls aufgrund eines zu geringen Absorptionsgrads nicht ohne weiteres von dem Laser aufgeschmolzen werden können.

Nachfolgend wird die Erfindung anhand der Figuren näher erläutert. Es zeigen
- **Figur 1**: eine schematische Darstellung einzelner Partikel des oberflächenmodifizierten Pulvers zum Lasersintern sowie
- **Figur 2**: eine schematische Darstellung zur Veranschaulichung der Verwendung des Pulvers nach Figur 1 beim selektiven Lasersintern.

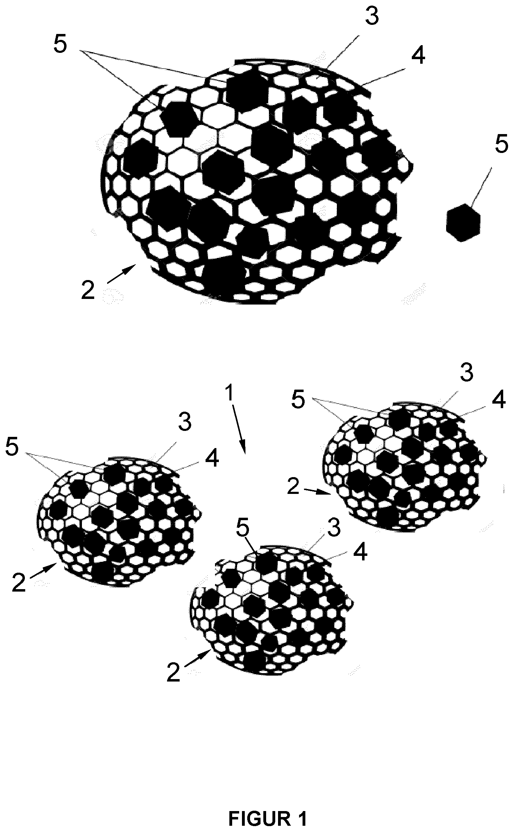

Figur 1 zeigt in stark vergrößerter, schematischer Darstellung lediglich wenige Partikel 2 des oberflächenmodifizierten Pulvers 1. Die einzelnen Partikel 2 weisen eine unregelmäßige Form mit einem Äquivalentdurchmesser D 50 von etwa 30 um auf.

Jeder Partikel 2 des Pulvers 1 besteht aus einem Partikelkern 3, an dessen Oberfläche 4 Laserabsorber 5 in molekularer Form angebunden sind. Die Laserabsorber 5 bedecken mindestens 30 % der Oberfläche 4 jedes Partikelkerns 3.

Die Partikelkerne 3 bestehen aus reinem Kupfer mit einem geringem Absorptionsgrad von etwa 5 % für eine auftreffende Laserstrahlung mit einer Wellenlänge von 1064 nm. Bei den Laserabsorbern 5 handelt es sich um Teilchen aus einem Metallhydroxid, beispielsweise Dikupferhydroxidphosphat, welches einen sehr hohen Absorptionsgrad für die auftreffende Laserstrahlung mit einer Wellenlänge von 1064 nm aufweist.

Die Laserabsorber 5 sind an die Oberfläche 4 der Partikelkerne 3 durch Physisorption angebunden. Die Anbindung kann beispielsweise durch einen Mischprozess der Partikelkerne 3 aus Kupfer und den Laserabsorbern 5 bewirkt werden.

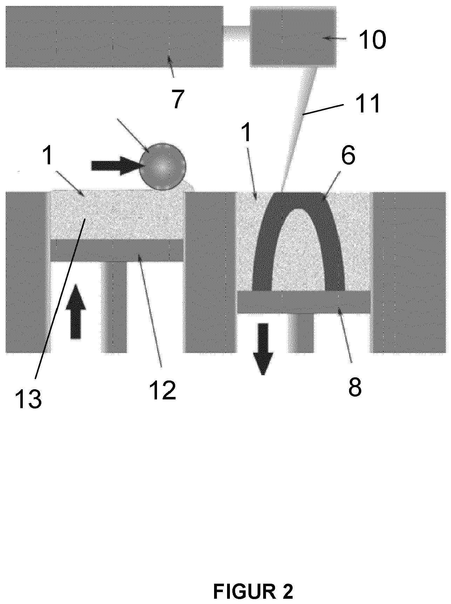

Das derart oberflächenmodifizierte Pulver 1 wird zum Lasersintern, insbesondere zum selektiven Lasersintern verwendet. Der Prozess des selektiven Lasersinterns wird nachfolgend anhand der Figur 2 näher erläutert:
Das selektive Lasersintern ist ein additives Fertigungsverfahren, um ein Bauteil 6, durch Lasersintern mit einem Laser 7 aus dem Pulver 1 herzustellen. Die geometrischen Daten des herzustellenden Bauteils 6 müssen als Schichtdaten vorliegen. Mittels der Schichtdaten des Bauteils 6 wird ein Laserscanner 10 gesteuert, mit dem zeilenweise die Laserstrahlung 11 des Lasers 7 intensitätsgesteuert auf das Pulver 1 übertragen wird.

Das Pulver 1 wird zunächst aus einem Pulvervorrat 13 mit einem das Pulver nachführenden Kolben 12 und einer Walze 9 auf eine Bauplattform 8 vollflächig als Schicht in einer Schichtdicke von 20 bis 40 µm aufgebracht (Pulverbett). Die Schichtendaten des Bauteils 6 werden sodann computergesteuert schichtweise entsprechend der Schichtkontur des Bauteils 6 in das Pulverbett gesintert. Die Bauplattform 8 wird vor jedem Schritt geringfügig abgesenkt, um anschließend die nächste Schicht aus Pulver 1 aus dem Pulvervorrat 13 mit der Walze 9 aufzuziehen. Alternativ kann ein Rakel verwendet werden.

Durch die schichtweise Herstellung des Bauteils 6 lassen sich auch hinterschnittene Konturen erzeugen. Stützstrukturen sind nicht erforderlich, weil das Bauteil 6 während seiner Herstellung von dem umgebenden Pulver 1 gestützt wird.

### Bezugszeichenliste

- 1: Pulver
- 2: Partikel
- 3: Partikelkern
- 4: Oberfläche
- 5: Laserabsorber
- 6: Bauteil
- 7: Laser
- 8: Bauplattform
- 9: Walze
- 10: Laserscanner
- 11: Laserstrahlung
- 12: Kolben
- 13: Pulvervorrat

## Patentansprüche

1. Oberflächenmodifiziertes Pulver (1) zum Lasersintern umfassend
- übereinstimmende Partikel (2) mit einem Partikelkern, wobei jeder Partikelkern (3) aus reinem Kupfer besteht (3) und
- an der Oberfläche (4) jedes Partikelkerns (3) angebundene Laserabsorber (5), wobei die Laserabsorber (5) die Oberfläche(4) jedes Partikelkerns (3) zu mindestens 25 % belegen und gegenüber dem Partikelkern (3) einen höheren Absorptionsgrad für eine Laserstrahlung (11) zum Lasersintern aufweisen,
**dadurch gekennzeichnet, dass**
- die Laserstrahlung (11) eine Wellenlänge im nahen Infrarotbereich aufweist,
- die Laserabsorber (5) aus Metallhydroxiden bestehen und durch Physisorption an die Oberfläche (4) jedes Partikelkerns (3) angebunden sind, wobei der Absorptionsgrad der Laserabsorber (5) mindestens 20 % beträgt.

2. Oberflächenmodifiziertes Pulver nach Anspruch 1, **dadurch gekennzeichnet, dass** die Laserabsorber (5) in molekularer Form vorliegen.

3. Oberflächenmodifiziertes Pulver nach Anspruch 1 oder 2, **dadurch gekennzeichnet, dass** die Wellenlänge 1064 nm beträgt.

4. Verwendung des oberflächenmodifizierten Pulvers (1) nach einem oder mehreren der Ansprüche 1 bis 3 zum Lasersintern in einem Pulverbett des oberflächenmodifizierten Pulvers (1).

5. Verwendung des oberflächenmodifizierten Pulvers (1) nach einem oder mehreren der Ansprüche 1 bis 3 zur Herstellung räumlicher Strukturen (6) durch selektives Lasersintern.

6. Verwendung des oberflächenmodifizierten Pulvers (1) nach Anspruch 4 oder 5, **dadurch gekennzeichnet, dass** zum Lasersintern wahlweise ein Nd:YAG-Laser oder Faserlaser (7) zum Einsatz gelangt.

7. Verwendung des oberflächenmodifizierten Pulvers (1) nach einem oder mehreren der Ansprüche 1 bis 3 zum Laserauftragsschweißen mit Pulver.

## Claims

1. Surface-modified powder (1) for laser sintering, comprising
- corresponding particles (2) having a particle core, wherein each particle core (3) consists of pure copper (3), and
- laser absorbers (5) bound to the surface (4) of each particle core (3), wherein the laser absorbers (5) occupy at least 25% of the surface (4) of each particle core (3) and have a higher absorptance for laser radiation (11) for laser sintering, compared with the particle core (3),
**characterized in that**
- the laser radiation (11) has a wavelength in the near infrared range,
- the laser absorbers (5) consist of metal hydroxides and are bound to the surface (4) of each particle core (3) by physisorption, wherein the absorptance of the laser absorbers (5) is at least 20%.

2. Surface-modified powder according to claim 1, **characterized in that** the laser absorbers (5) are present in molecular form.

3. Surface-modified powder according to claim 1 or 2, **characterized in that** the wavelength is 1064 nm.

4. Use of the surface-modified powder (1) according to one or more of claims 1 to 3 for laser sintering in a powder bed of the surface-modified powder (1).

5. Use of the surface-modified powder (1) according to one or more of claims 1 to 3 for producing three-dimensional structures (6) by selective laser sintering.

6. Use of the surface-modified powder (1) according to either claim 4 or claim 5, **characterized in that,** for laser sintering, electively a Nd:YAG laser or fiber laser (7) is used.

7. Use of the surface-modified powder (1) according to one or more of claims 1 to 3 for laser deposition welding with powder.

## Revendications

1. Poudre à surface modifiée (1) pour le frittage laser, comprenant
- des particules concordantes (2) avec un noyau de particule, dans laquelle chaque noyau de particule (3) est constitué de cuivre pur (3), et
- des absorbants pour laser (5) reliés à la surface (4) de chaque noyau de particule (3), dans laquelle les absorbants pour laser (5) occupent au moins 25 % de la surface (4) de chaque noyau de particule (3) et présentent, par rapport au noyau de particule (3), un degré d'absorption plus élevé pour un rayonnement laser (11) pour le frittage laser,
**caractérisé en ce que**
- le rayonnement laser (11) présente une longueur d'onde dans la plage infrarouge proche,
- les absorbants pour laser (5) sont constitués d'hydroxydes métalliques et sont reliés à la surface (4) de chaque noyau de particule (3) par physisorption, dans laquelle le degré d'absorption des absorbants pour laser (5) est d'au moins 20 %.

2. Poudre à surface modifiée selon la revendication 1, **caractérisée en ce que** les absorbants pour laser (5) sont présents sous une forme moléculaire.

3. Poudre à surface modifiée selon la revendication 1 ou 2, **caractérisée en ce que** la longueur d'onde est de 1064 nm.

4. Utilisation de la poudre à surface modifiée (1) selon l'une quelconque ou plusieurs des revendications 1 à 3 pour le frittage laser dans un lit de poudre de la poudre à surface modifiée (1).

5. Utilisation de la poudre à surface modifiée (1) selon l'une quelconque ou plusieurs des revendications 1 à 3 pour fabriquer des structures spatiales (6) par frittage laser sélectif.

6. Utilisation de la poudre à surface modifiée (1) selon la revendication 4 ou 5, **caractérisée en ce qu'**au choix un laser Nd:YAG ou un laser à fibre (7) est utilisé pour le frittage laser.

7. Utilisation de la poudre à surface modifiée (1) selon l'une quelconque ou plusieurs des revendications 1 à 3 pour le soudage de rechargement par laser à poudre.
